# EUROPEAN PATENT APPLICATION

(11) **EP 2 472 064 A2**
(43) Date of publication of application: **04.07.2012**
(21) Application number: 11250937.7
(22) Date of filing: 23.12.2011
(51) Int. Cl.: F01D 5/28

(54) **Airfoil for gas turbine engine**

(30) Priority: 30.12.2010 US 201013428710
(71) Applicant: Rolls-Royce Corporation, Indianapolis, IN 46241 (US)
(72) Inventor: Rice, Edward Claude, Indiandapolis, IN 46234 (US)
(74) Representative: Dauncey, Mark Peter

(57) **Abstract**

One embodiment of the present invention is a unique method for producing a turbomachine airfoil. Other embodiments include unique methods for manufacturing an airfoil for a gas turbine engine. Still other embodiments include apparatuses, systems, devices, hardware, methods, and combinations for airfoils for gas turbine engines and other turbomachinery. Further embodiments, forms, features, aspects, benefits, and advantages of the present application will become apparent from the description and figures provided herewith.

## Description

### Field of the Invention

The present invention relates to airfoils, and more particularly, airfoils for gas turbine engines and other turbomachinery.

### Background

Airfoils for gas turbine engines and other turbomachinery remain an area of interest. Some existing systems have various shortcomings, drawbacks, and disadvantages relative to certain applications. Accordingly, there remains a need for further contributions in this area of technology.

### Summary

One embodiment of the present invention is a unique method for producing a turbomachine airfoil. Other embodiments include unique methods for manufacturing an airfoil for a gas turbine engine. Still other embodiments include apparatuses, systems, devices, hardware, methods, and combinations for airfoils for gas turbine engines and other turbomachinery. Further embodiments, forms, features, aspects, benefits, and advantages of the present application will become apparent from the description and figures provided herewith.

### Brief Description of the Drawings

The description herein makes reference to the accompanying drawings wherein like reference numerais refer to like parts throughout the several views, and wherein:
FIG. 1 schematically illustrates some aspects of a non-limiting example of a gas turbine engine in accordance with an embodiment of the present invention.
FIG. 2 depicts some aspects of a non-limiting example of an airfoil in accordance with an embodiment of the present invention.
FIG. 3 is a cross section of the airfoil of FIG. 2
FIG. 4 is a cross section illustrating some aspects of a non-limiting example of an airfoil in accordance with an embodiment of the present invention that includes a hollow substrate.
FIG. 5 is a cross section illustrating some aspects of a non-limiting example of an airfoil in accordance with an embodiment of the present invention having a substrate removed.

### Detailed Description

For purposes of promoting an understanding of the principles of the invention, reference will now be made to the embodiments illustrated in the drawings, and specific language will be used to describe the same. It will nonetheless be understood that no limitation of the scope of the invention is intended by the illustration and description of certain embodiments of the invention, In addition, any alterations and/or modifications of the illustrated and/or described embodiment(s) are contemplated as being within the scope of the present invention. Further, any other applications of the principles of the invention, as illustrated and/or described herein, as would normally occur to one skilled in the art to which the invention pertains, are contemplated as being within the scope of the present invention.

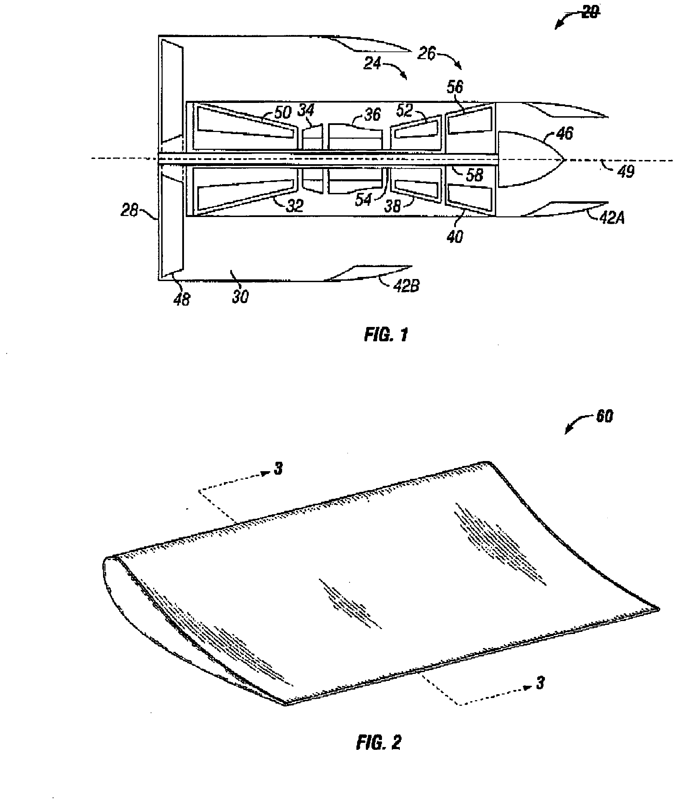

Referring to the drawings, and in particular FIG. 1, there are illustrated some aspects of a non-limiting example of a gas turbine engine 20 in accordance with an embodiment of the present invention. In one form, engine 20 is a propulsion engine, e.g., an aircraft propulsion engine. In other embodiments, engine 20 may be any other type of gas turbine engine, e.g., a marine gas turbine engine, an industrial gas turbine engine, or any aero, aero-derivative or non-aero gas turbine engine. In one form, engine 20 is a two spool engine having a high pressure (HP) spool 24 and a low pressure (LP) spool 26. In other embodiments, engine 20 may include only a single spool, or may include three or more spools, e.g., may include an intermediate pressure (IP) spool and/or other spools. In one form, engine 20 is a turbofan engine, wherein LP spool 26 is operative to drive a propulsor 28 in the form of a turbofan (fan) systems, which may be referred to as a turbofan, a fan or a fan system. In other embodiments, engine 20 may be a turboprop engine, wherein LP spool 26 powers a propulsor 28 in the form of a propeller system (not shown), e.g., via a reduction gearbox (not shown). in yet other embodiments, LP spool 26 powers a propulsor 26 in the form of a propfan. in still other embodiments, propulsor 28 may take other forms, such as one or more helicopter rotors or tilt-wing aircraft rotors.

In one form, engine 20 includes, in addition to fan 28, a bypass duct 30, a compressor 32, a diffuser 34, a combustor 36, a high pressure (HP) turbine 38, a low pressure (LP) turbine 40, a nozzle 42A. a nozzle 42B, and a tailcone 46, which are generally disposed about and/or rotate about an engine centerline 49. In other embodiments, there may be, for example, an intermediate pressure spool having an intermediate pressure turbine. In one form, engine centerline 49 is the axis of rotation of fan 28, compressor 32, turbine 38 and turbine 40. In other embodiments, one or more of fan 28, compressor 32, turbine 38 and turbine 40 may rotate about a different axis of rotation.

In the depicted embodiment, engine 20 core low is discharged through nozzle 42A, and the bypass flow is discharged through nozzle 42B. In other embodiments, other nozzle arrangements may be employed, e.g., a common nozzle for core and bypass flow; a nozzle for core flow, but no nozzle for bypass flow; or another nozzle arrangement Bypass duct 30 and compressor 32 are in fluid communication with fan 28. Nozzle 42B is in fluid communication with bypass duct 30. Diffuser 34 is in fluid communication with compressor 32. Combustor 36 is fluidly disposed between compressor 32 and turbine 38. Turbine 40 is fluidly disposed between turbine 38 and nozzle 42A. In one form, combustor 36 includes a combustion liner (not shown) that contains a continuos combustion process. In other embodiments, combustor 36 may take other forms, and may be, for example, a wave rotor combustion system, a rotary valve combustion system, a pulse detonation combustion system or a singer combustion system, and may employ deflagration and/or detonation combustion processes.

Fan system 28 includes a fan rotor system 48 driven by LP spool 26. In various embodiments, fan rotor system 48 may include one or more rotors (not shown) that are powered by turbine 40. In various embodiments, fan 28 may include one or more fan vane stages (not shown in FIG. 1) that cooperate with fan blades (not shown) of fan rotor system 48 to compress air and to generate a thrust-producing flow. Bypass duct 30 is operative to transmit a bypass flow generated by fan 28 around the core of engine 20. Compressor 32 includes a compressor rotor system 50. In various embodiments, compressor rotor system 50 includes one or more rotors (not shown) that are powered by turbine 38. Compressor 32 also includes a plurality of compressor vane stages (not shown in FIG. 1) that cooperate with compressor blades (not shown) of compressor rotor system 50 to compress air. In various embodiments, the compressor vane stages may include a compressor discharge vane stage and/or a diffuser vane stage.

Turbine 38 includes a turbine rotor system 52. In various embodiments, turbine rotor system 52 includes one or more rotors (not shown) operative to drive compressor rotor system 50. Turbine 38 also includes a plurality of turbine vane stages (not shown in FIG. 1) that cooperate with turbine blades (not shown) of turbine rotor system 52 to extract power from the hot gases discharged by combustor 36. Turbine rotor system 52 is drivingly coupled to compressor rotor system 50 via a shafting system 54. Turbine 40 includes a turbine rotor system 56. In various embodiments, turbine rotor system 56

includes one or more rotors (not shown) operative to drive fan rotor system 48. Turbine 40 also includes a plurality of turbine vane stages (not shown in FIG. 1) that cooperate with turbine blades (not shown) of turbine rotor system 56 to extract power from the hot gases discharged by turbine 38. Turbine rotor system 56 is drivingly coupled to fan rotor system 48 via a shafting system 58. In various embodiments, shafting systems 54 and 58 include a plurality of shafts that may rotate at the same or different speeds and directions for driving fan rotor system 48 rotor(s) and compressor rotor system 50 rotor(s). In some embodiments, only a single shaft may be employed in one or both of shafting systems 54 and 58. Turbine 40 is operative to discharge the engine 20 core flow to nozzle 42A.

During normal operation of gas turbine engine 20, air is drawn into the inlet of fan 28 and pressurized by fan rotor 48. Some of the air pressurized by fan rotor 48 is directed into compressor 32 as core flow, and some of the pressurized air is directed into bypass duct 30 as bypass flow. Compressor 32 further pressurizes the portion of the air received therein from fan 28, which is then discharged into diffuser 34. Diffuser 34 reduces the velocity of the pressurized air, and directs the diffused core airflow into combustor 36. Fuel is mixed with the pressurized air in combustor 36, which is then combusted. The hot gases exiting combustor 36 are directed into turbines 38 and 40, which extract energy in the form of mechanical shaft power to drive compressor 32 and fan 28 via respective shafting systems 54 and 58. The hot gases exiting turbine 40 are discharged through nozzle system 42A, and provide a component of the thrust output by engine 20.

Gas turbine engine 20 employs many airfoils in the form of blades and vanes in order to pressurize, expand and/or direct the flow of air and/or combustion products in and through engine 20. The airfoils are used in fan 28, compressor 32 and turbines 38 and 40. It is desirable that the airfoils be light in weight, e.g., in order to reduce the weight of gas turbine engine 20 and increase the damage tolerance of engine 20. Accordingly, embodiments of the present invention envision, among other things, airfoils having a skin formed from one or more nano-metals. Nano-metals may have superior properties relative to conventional metals, e.g., including strength and crack resistance, due to the very small grain size of nano-metals. Although embodiments are described herein as with respect to airfoils for gas turbine engines, the present application also envisions embodiments pertaining to airfoils for other types of turbomachinery.

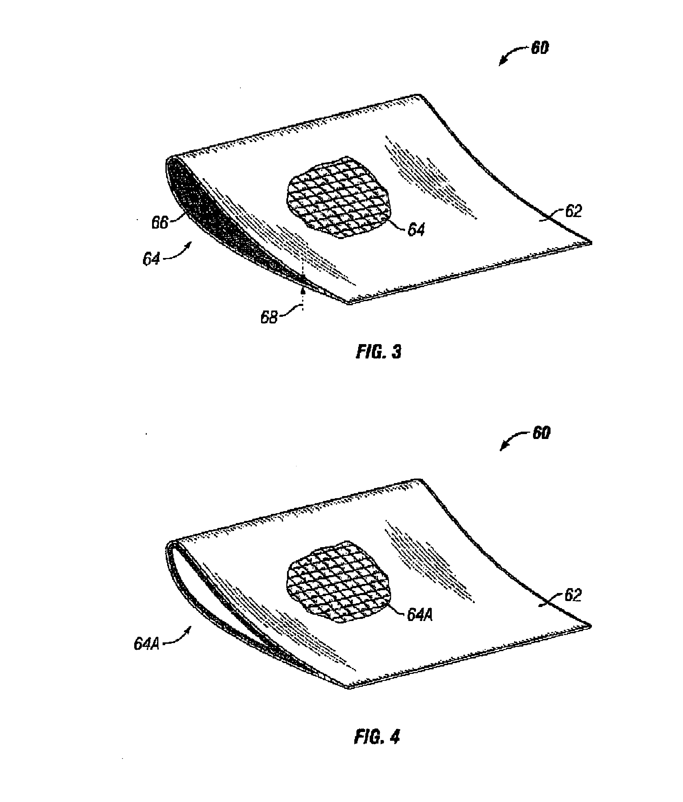

Referring to FIGS. 2-5, some aspects of a non-limiting example of an airfoil 60 in accordance with an embodiment of the present invention is depicted. Airfoil 60 includes a nano-metal skin 62 formed over a composite substrate 64. A portion of nano-metal skin 62 is removed in the illustration of FIG. 3 in order to illustrate some aspects of substrate 64. Substrate 64 is formed of a composite material having electrically conductive elements 66 dispersed therein. In one form, electrically conductive elements 66 are configured to provide electrical conductivity to substrate 64, e.g., sufficient for use in depositing nano-metal material onto substrate 64 via an electrodeposition process.

Substrate 64 is formed into an airfoil shape. In one form, substrate 64 is formed into the airfoil shape by an injection molding process. In other embodiments, other manufacturing processes may be used in addition to or in place of injection molding to form substrate 64 into an airfoil shape. In one form, composite substrate 64 includes a resin having electrically conductive elements 66 disposed therein. In one form, electrically conductive elements 66 are fibers. In other embodiments, electrically conductive elements 66 may take other forms, e.g., one or more conductive powders dispersed throughout the resin in addition to or in place of fibers. In a particular form, composite substrate 64 is a carbon-fiber composite, wherein electrically conductive elements 66 are carbon fibers, e.g., in a carbon fiber fabric.

In one form, substrate 64 is solid, e.g., as depicted in FIG. 3. In another form, the substrate may be hollow, depicted in the cross-section of FIG. 4 as substrate 64A. In other embodiments, substrate 64 may take other geometric forms that provide an airfoil shape on the external surface of substrate 64. For example and without limitation, in some embodiments, substrate 64 may be a hollow substrate having reinforcing ribs or struts extending through the hollow.

After forming substrate 64, a nano-metal is deposited onto substrate 64 to form nano-metal skin 62. in one form, the nano-metal is deposited onto the surface of substrate 64 to form skin 62 via an electrodeposition process. In other embodiments, other processes may be employed to deposit the nano-metal onto substrate 64. In one form, the nano-metal is a nickel-based alloy. In other embodiments, other metals and/or alloys may be employed in addition to or in place of a nickel-based alloy. In some embodiments, coatings or other treatments may be applied to the surface of nancy-metal skin 62 and/or may be applied to substrate 64 prior to the deposition of the nano-metal material. The nano-metal skin is formed to a desired thickness 68. Thickness 68 may vary with the needs of the application. In addition, the thickness of skin 62 may vary with location about skin 62. For example, in one form, the nano-metal layer(s) forming skin 62 is configured to withstand thermal, mechanical and aerodynamic loading associated with its location and function during service in engine 20, and hence may have different thickness values at different locations about skin 62. In one form, the nano-metal used to form skin 62 has a grain size in the range of 15 nanometers to 100 nanometers. In other embodiments, larger and/or smaller grain sizes may be employed in addition to or in place of values within the range of 15 nanometers to 100 nanometers.

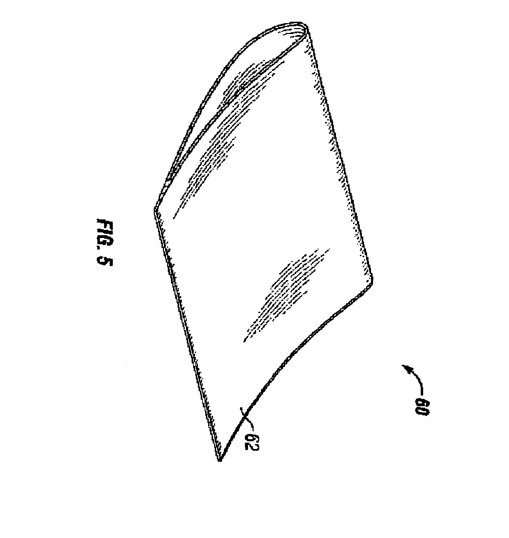

In one form, skin 62 is sintered after electrodeposition onto substrate 64. ln other embodiments, skin 62 may not be sintered, e.g., depending upon the type of process used to deposit the nano-metal onto substrate 64. In various embodiments, other treatments may be applied to skin 62, for example and without limitation, a hot isostatic press (HIP). In some embodiments, as depicted in FIG. 5, substrate 64 may be removed after skin 62 is formed, e.g., via electrical, chemical and/or mechanical processing. In embodiments where skin 62 is sintered, substrate 64 may be removed after sintering, or may be removed prior to sintering or during sintering. In some embodiments, substrate 64 may be retained as part of airfoil 60, e.g., to provide enhanced damage tolerance and/or airfoil damping. Although depicted as an airfoil alone, in various embodiments, airfoil 60 may be formed to include attachment features for affixing airfoil 60 to engine 20 and/or other components, or may include other features. For example and without limitation, when implemented as a fan, compressor or turbine blade, airfoil 60 may include a rotor attachment feature and/or may include a mid-span snubber and/or tip shroud; when implemented as a vane, airfoil 60 may include an attachment feature for securing airfoil 60 to a vane ring or a vane segment. In some embodiments, attachment features and/or other features may be formed separately and affixed to airfoil 60.

Embodiments of the present invention include a method for producing a turbomachine airfoil, comprising: providing a composite material interspersed with electrically conductive elements; forming the composite material into a substrate having an airfoil shape; and depositing a nano-metal onto the substrate.

In a refinement, the nano-metal is a nicker based alloy.

In another refinement, the nano-metal has a grain size in the range of 15 nanometers to 100 nanometers.

In yet another refinement, the electrically conductive elements are fibers.

In still another refinement, the electrically conductive elements are carbon fibers.

In yet still another refinement, the composite material is a carbon fiber composite.

In an additional refinement, the composite material includes a resin.

In a further refinement, the nano-metal is deposited into the airfoil shape using electrodeposition.

In a yet further refinement, the method further comprises sintering the nano-metal subsequent to depositing a nano-metal onto the airfoil shape.

In a still further refinement, the method further comprises removing the substrate from the airfoil.

In a yet still further refinement, the substrate is hollow.

Embodiments of the present invention include a method for manufacturing an airfoil for a gas turbine engine, comprising: interspersing a composite material with electrically conductive elements; forming a substrate having an airfoil shape from the composite material with electrically conductive elements; and forming a nano-metal layer on the substrate.

In a refinement, the method further comprises sintering the nano-metal layer.

In another refinement, the nano-metal layer has a thickness configured to withstand thermal and mechanical loads of the airfoil in service in a gas turbine engine.

In yet another refinement, the composite material is a carbon-fiber composite.

In still another refinement, the nano-metal used to form the nano-metal layer is a nickel based alloy having a grain size in the range of 15 nanometers to 100 nanometers.

In yet still another refinement, the nano-metal layer is formed onto the substrate using electrodeposition.

In an additional refinement, the method further comprises removing the substrate from the airfoil.

In a further refinement, the airfoil shape is formed by injection molding the composite material with electrically conductive elements.

Embodiments of the present invention include a method for manufacturing an airfoil for a gas turbine engine, comprising: a step for forming a composite material interspersed with electrically conductive elements into an airfoil shape having an electrically conductive surface, a step for depositing a nano-metal layer at one or more desired thicknesses onto the airfoil shape; and a step for solidifying the nano-metal layer.

While the invention has been described in connection with what is presently considered to be the most practical and preferred embodiment, it is to be understood that the invention is not to be limited to the disclosed embodiment(s), but on the contrary, is intended to cover various modifications and equivalent arrangements included within the spirit and scope of the appended claims, which scope is to be accorded the broadest interpretation so as to encompass all such modifications and equivalent structures as permitted under the law. Furthermore it should be understood that while the use of the word preferable, preferably, or preferred in the description above indicates that feature so described may be more desirable, it nonetheless may not be necessary and any embodiment lacking the same may be contemplated as within the scope of the invention, that scope being defined by the claims that follow. In reading the claims it is intended that when words such as "a," "an," "at least one" and "at least a portion" are used, there is no intention to limit the claim to only one item unless specifically stated to the contrary in the claim. Further, when the language "at least a portion" and/or "a portion" is used the item may include a portion and/or the entire item unless specifically stated to the contrary.

## Claims

1. A method for producing a turbomachine airfoil, comprising:
providing a composite material interspersed with electrically conductive elements;
forming the composite material into a substrate having an airfoil shape; and
depositing a nano-metal onto the substrate.

2. The method of claim 1, wherein the nano-metal is a nickel based alloy.

3. The method of claim 1, wherein the electrically conductive elements are fibers

4. The method of claim 3, wherein the electrically conductive elements are carbon fibers.

5. The method of any preceding claim, wherein the composite material includes a resin.

6. The method of claim 1, further comprising sintering the nano-metal subsequent to depositing a nano-metal onto the airfoil shape.

7. A method for manufacturing an airfoil for a gas turbine engine, comprising:
interspersing a composite material with electrically conductive elements;
forming a substrate having an airfoil shape from the composite material with electrically conductive elements; and
forming a nano-metal layer on the substrate.

8. The method of claim 7, further comprising sintering the nano-metal layer.

9. The method of claim 7, wherein the nano-metal layer has a thickness configured to withstand thermal and mechanical loads of the airfoil in service in a gas turbine engine.

10. The method of claims 1 or 7, wherein the composite material is a carbon-fiber composite.

11. The method of claims 1 or 7, wherein the nano-metal has a grain size in the range of 15 nanometers to 100 nanometers.

12. The method of claims 1 or 7, wherein the nano-metal is formed onto the substrate using electrodeposition.

13. The method of claims 1 or 7, further comprising removing the substrate from the airfoil; or wherein the airfoils shape is formed by injection molding the composite material with electrically conductive elements.

14. A method for manufacturing an airfoil for a gas turbine engine, comprising:
a step for forming a composite material interspersed with electrically conductive elements into an airfoil shape having an electrically conductive surface;
a step for depositing a nano-metal layer at one or more desired thicknesses onto the airfoil shape, and
a step for solidifying the nano-metal layer.

15. The method of claims 1 or 7, wherein the substrate is hollow.
